# EUROPEAN PATENT APPLICATION

(11) **EP 4 406 989 A1**
(43) Date of publication of application: **31.07.2024**
(21) Application number: 23153858.8
(22) Date of filing: 30.01.2023
(51) Int. Cl.: C08G 59/38, C08G 59/66, C08L 63/00, C09D 163/00, C09J 163/00, C08G 59/68

(54) **TWO-COMPONENT EPOXY RESIN COMPOSITION**

(71) Applicant: Henkel AG & Co. KGaA, 40589 Düsseldorf (DE)
(72) Inventor: Chen, Chunfu, Kanagawa Prefecture, 211-0067 (JP)

(57) **Abstract**

The present invention relates to a room temperature fast curable two-component (2K) curable composition comprising a first component being an epoxy resin part and comprising two distinguishing epoxy resins; and a second component being a curing agent part and comprising a poly mercaptoalkyl glycoluril compound, and an accelerator. Further, the present invention relates to a cured product obtained from the two-component (2K) curable composition according to the invention and the cured product's use.

## Description

### FIELD OF THE INVENTION

The present invention relates to a room temperature fast curable two-component (2K) curable composition comprising a first component being an epoxy resin part and comprising two distinguishing epoxy resins, and a second component being a curing agent part and comprising a poly mercaptoalkyl glycoluril compound, and an accelerator. Further, the present invention relates to a cured product obtained from the two-component (2K) curable composition according to the invention and the cured product's use.

### BACKGROUND OF THE INVENTION

An epoxy resin has been used in a wide range of application such as coating materials, electric and electronic insulating materials and adhesive agents since its cured products have excellent performance in point of a mechanical property, an electrical property, a thermal property, chemical resistance and an adhesion property. The properties of the cured epoxy resin may be tailored to achieve said specific performance characteristics predominantly on the basis that a particular selection of resin, modifier and cross-linking agent or curative can be chosen.

Epoxy resins can react fast with liquid curing agents. Therefore, most existing epoxy compositions are provided as two-component (2K) type compositions with a first part being an epoxy resin composition and a second part being a curing agent. Mixing these two parts is needed before use.

After being combined, the composition is ready for application. Such epoxy compositions show high adhesion to various substrates such as metals, concrete, ceramics, glass and many plastics. Curing shrinkage is very low and its cured materials possess rigid and strong cross-linked structures suitable for use as adhesives, coatings and composites.

Amine-based two component epoxy compositions are the most widely used type of two-component epoxy compositions. They can cure at room temperature, which is in many cases beneficial, however they need long curing times, up to several days.

As an alternative, mercaptan-based epoxy compositions are used as two-component epoxy compositions. They can cure much faster. However, they are associated with the property of having a relatively low glass transition temperature, usually around room temperature. This property limits the cured product's application. The cured product, however, should be suitable for use as adhesives, coatings or composite materials in various applications.

The invention's underlaying problem relates to the provision of a two-component epoxy resin composition exhibiting fast curability at lower temperature, particularly at room temperature, and a high glass transition temperature. In particular, the invention's underlaying problem relates to the provision of a two-component epoxy resin composition on a mercaptan based epoxy resin exhibiting fast curability at lower temperature, particularly at room temperature, and a high glass transition temperature.

### SUMMARY OF THE INVENTION

The invention's underlaying problem is solved by the subject-matter of claim 1. According to a first aspect of the invention, there is provided a two-component (2K) curable composition comprising: a first component being an epoxy resin part and comprising, based on the weight of the first component, 20 wt.% or more of a bisphenol A epoxy resin, and 5 wt.% or more of a multifunctional epoxy resin, and a second component being a curing agent part and comprising, based on the weight of the second component, 80 wt.% or more of a poly mercaptoalkyl glycoluril compound, and from 0.5 wt.% to 20 wt.% of an accelerator.

The essential components along with their respective amounts of the essential components enable that a high glass transition temperature and a relatively low curing temperature are achieved.

The first component is the epoxy resin part and the second component is the curing resin part. Mixing both together and curing the obtained mixture results in the cured composition.

In one embodiment, the composition comprises the first component comprising, based on the weight of the first component, 30 wt.% or more, preferably from 40 wt.% to 90 wt.%, more preferred from more than 50 wt.% to 80 wt.%, of the bisphenol A epoxy resin, and 15 wt.% or more, preferably 10 wt.% to 60 wt.%, more preferred 20 wt.% to less than 50 wt.%, of the multifunctional epoxy resin.

In one embodiment, the composition comprises the second component comprising, based on the weight of the second component, 85 wt.% or more, preferably from 89 wt.% to 96 wt.%, more preferred from 90 wt.% to 95 wt.%, of the poly mercaptoalkyl glycoluril compound, and from 1 wt.% to 15 wt.%, preferably from 4 wt.% to 11 wt.%, more preferred 5 wt.% to 10 wt.%, of the accelerator.

As an essential component of the composition, the epoxy resin part comprises the bisphenol-A-epoxy resin. According to one embodiment, the bisphenol-A-epoxy resin is bisphenol A diglycidyl ether being a liquid epoxy resin. It may be prepared by O-alkylation of bisphenol A with epichlorohydrin. A commercially available product is jER 828 supplied by Mitsubishi Chemical Corporation.

The second essential component of the epoxy resin part is the multifunctional epoxy resin. According to one embodiment, the multifunctional epoxy resin comprises more than two glycidyl groups in one molecule. In a preferred embodiment, the multifunctional epoxy resin comprises three, four, five or six glycidyl groups in one molecule, more preferred three, four or five glycidyl groups, most preferred three or four glycidyl groups. In particular, the multifunctional epoxy resin comprises four glycidyl groups.

According to preferred embodiments, where the multifunctional epoxy resin comprises four glycidyl groups, there may be tetraglycidyl ether or tetraglycidyl amines used. Thus, according to a preferable embodiment, the multifunctional epoxy resin is a tetraglycidyl ether or tetraglycidyl amine, wherein the tetraglycidyl amine is more preferred. Even more preferred, the multifunctional epoxy resin is selected from the group consisting of tetraglycidyldiaminodiphenylmethane, tetraglycidylbis(aminomethylcyclohexane), tetraglycidyl-m-xylenediamine, tetraglycidylbenzophenone, bisresorcinoltetraglycidyl ether, tetraglycidyl ether of methylene dianiline, and combination thereof, most preferred the multifunctional epoxy resin is 2,2'-[(1-methylethylidene)bis[6-(2-oxiranylmethoxy)-3,1-phenylene]methylene]]bis-oxirane or 4,4'-Methylenebis[N,N-bis(oxiranylmethyl)aniline].

According to preferred embodiments, where the multifunctional epoxy resin comprises three glycidyl groups, there may be a triglycidyl ether or a triglycidyl amine used. Thus, according to a preferable embodiment, the multifunctional epoxy resin is a triglycidyl ether or triglycidyl amine, wherein the triglycidyl amine is more preferred. Even more preferred, the multifunctional epoxy resin is selected from the group consisting of N,N,O-triglycidyl-m-aminophenol, N,N,O-triglycidyl-p-aminophenol, fluoroglycinoltriglycidyl ether, trihydroxybiphenyltriglycidyl ether, triglycidylaminophenol, and combination thereof.

Examples of multifunctional epoxy resins include LY 5056, MY 720, XB 9721, MY 9512, MY 9612, MY 9634, MY 9655, MY 9663 (all from Huntsman Corporation), AG 80 (from Shanghai Institute of Organic Synthesis), and Jeh 011 (from Changshu Jiafa Chemical Company). Preferable commercially available multifunctional epoxy resins in the framework of this disclosure are MY 721 (from Huntsman Corporation), Ancamine KS54 (from Evonik Corporation) or Araldite MY 0510 (from Huntsman Corporation), whereupon MY 721 and Ancamine KS54 are more preferred.

The first component of the two-component (2K) curable composition, i.e. of the epoxy resin part, may optionally comprise - in an amount up to 20 wt.%, based on the weight of said first component - supplementary epoxide compounds to those defined above as essential compounds of the epoxy resin part. Said supplementary epoxide compounds may, for example, constitute from 0 to 15 wt.%, preferably from 0 to 10 wt.% and more preferably from 0 to 5 wt.% of the first component of the composition.

Epoxy resins as used herein may include mono-functional epoxy resins, functionalized epoxy resins, and combinations thereof. The functionalized epoxy may e.g. be a partially or fully (meth)acrylized epoxy resin. The supplementary epoxy resins may be pure compounds but equally may be mixtures epoxy functional compounds, including mixtures of compounds having different numbers of epoxy groups per molecule. A supplementary epoxy resin may be saturated or unsaturated, aliphatic, cycloaliphatic, aromatic or heterocyclic. Further, the epoxy resin may also be monomeric or polymeric.

Without intention to limit the present invention, illustrative monoepoxide compounds include: alkylene oxides; epoxy-substituted cycloaliphatic hydrocarbons, such as cyclohexene oxide, vinylcyclohexene monoxide, (+)-cis-limonene oxide, (+)-cis,trans-limonene oxide, (-)-cis,trans-limonene oxide, cyclooctene oxide, cyclododecene oxide and a-pinene oxide; epoxy-substituted aromatic hydrocarbons, monoepoxy substituted alkyl ethers of monohydric alcohols or phenols, such as the glycidyl ethers of aliphatic, cycloaliphatic and aromatic alcohols; monoepoxy-substituted alkyl esters of monocarboxylic acids, such as glycidyl esters of aliphatic, cycloaliphatic and aromatic monocarboxylic acids; monoepoxy-substituted alkyl esters of polycarboxylic acids wherein the other carboxy group(s) are esterified with alkanols; alkyl and alkenyl esters of epoxy-substituted monocarboxylic acids; epoxyalkyl ethers of polyhydric alcohols wherein the other OH group(s) are esterified or etherified with carboxylic acids or alcohols; and, monoesters of polyhydric alcohols and epoxy monocarboxylic acids, wherein the other OH group(s) are esterified or etherified with carboxylic acids or alcohols.

As an essential component of the composition, the curing agent part comprises the poly mercaptoalkyl glycoluril compound. This compound is a thiol, which means a compound having R-SH structure, in which R is alkyl group. The organic residue R comprises a glycoluril function. A glycoluril is an organic chemical composed of two cyclic urea groups joined across the same two-carbon chain. According to the invention the glycoluril is a poly mercptoalkyl glycoluril compound meaning that the compound comprises two or more mercapto groups, preferably three or four mercapto groups, more preferred four mercapto groups.

According to one embodiment, the poly mercaptoalkyl glycoluril compound is represented by the following formula I: 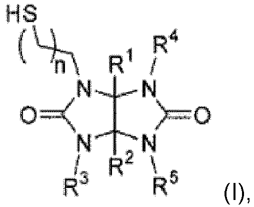 wherein n represents 0, 1, 2, or 3; R¹ and R² each independently represent a hydrogen atom, a C₁-C₄ alkyl or phenyl; at least one of R³, R⁴ or R⁵ represents a primary C₁-C₄ mercaptoalkyl, the others each independently represent a hydrogen, a C₁-C₄ alkyl or phenyl.

In that at least one of R³, R⁴ or R⁵ represents a primary C₁-C₄ mercaptoalkyl, the glycoluril compound represents a poly mercaptoalkyl glycoluril compound, because two or more, especially two, three or four residues are mercaptoalkyl groups. The organic residue R³, R⁴ or R⁵ not being the primary C₁-C₄ mercaptoalkyl group independently represent a hydrogen, a C₁-C₄ alkyl or phenyl.

According to a preferable embodiment, the poly mercaptoalkyl glycoluril compound is represented by the formula I, wherein n represents 0, 1, 2, or 3; R¹ and R² each independently represent a hydrogen atom, a C₁-C₄ alkyl or phenyl; and R³, R⁴ and R⁵ represent a primary C₁-C₄ mercaptoalkyl.

In a more preferred embodiment, the poly mercaptoalkyl glycoluril compound is represented by the above formula I, wherein n represents 1; R¹ and R² represent a hydrogen atom; and R³, R⁴ and R⁵ represent 1-mercaptoethyl.

In the most preferred embodiment, the poly mercaptoalkyl glycoluril compound is tetrahydro-1,3,4,6-tetrakis(3-mercaptopropyl)-imidazo[4,5-d]imidazole-2,5(1 H,3H)-dione (CAS# 1454838-81-3). A commercially available product is C3TS-G available from Shikoku Chemicals Corporation.

As an essential component of the composition, the curing agent part comprises an accelerator. According to a preferred embodiment, the accelerator is a tertiary amine, preferably a tertiary polyamine. The term "polyamine" is to be understood as an amine with more than one amine functions. According to the invention, the accelerator is preferably a tertiary polyamine, i.e. an amine with more than one amine functions. This may include an amine comprising besides tertiary amine functions also primary or secondary amine function.

The tertiary amine, preferably the tertiary polyamine, is an aromatic or an arylaliphatic amine.

In a preferred embodiment, the tertiary amine comprises two, three, four or five amine functions, more preferred two, three, or four amine functions, more preferred three amine functions. These embodiments may comprise an aromatic or an arylaliphatic amine.

In a more preferred embodiment, the accelerator is a tertiary amine being selected from the group consisting of triethylamine, tributylamine, N-ethyl-diisopropylamine, N,N,N',N'-tetramethyl-ethylenediamine, pentamethyl-diethylenetriamine, N,N,N',N'-tetramethylpropylenediamine, pentamethyldipropylenetriamine, N,N,N',N'-tetramethyl-1,3-butylenediamine, N,N,N',N'-tetramethyl-1 ,6-hexylenediamine, bis-(dimethylamino)-methane, N,N-dimethylbenzylamine, N,N-dimethyl-cyclohexylamine, N-methyl-dicyclohexylamine, N,N-dimethyl-hexadecylamine, bis-(N,N- diethylaminoethyl)-adipate, N,N-dimethyl-2-phenylethylamine, tri-(3-dimethylaminopropyl)amine, 1,4-diazabicyclo[2,2,2]octane, 1,8-diazabicyclo[5,4,0]undec-7-ene, 1,5-diazabicyclo[4,3,0]nonyl-5-ene, N-methylmorpholine, N-ethylmorpholine, N-cocoylmorpholine, N-aminoethylpiperazine, N,N'-dimethylpiperazine, N-methyl-N'-dimethylaminoethyl-piperazine, bis-(dimethylaminoethyl)-piperazine, 1,3,5-tri-(dimethylaminopropyl)-hexahydrotriazine, bis-(2-dimethylaminoethyl)-ether, 2,4,6-tri(dimethylaminomethyl)phenol, and combinations thereof. Preferably the amine is selected from the group consisting of N-aminoethylpiperazine, N,N'-dimethylpiperazine, and 2,4,6-tri(dimethylaminomethyl)phenol, wherein most preferred the amine is 2,4,6-tri(dimethylaminomethyl)phenol.

A commercially available product is Ancamine K54 from Evonik Corporation.

The compositions of the present invention may further comprise adjuvants and additives that can impart improved properties to these compositions. For instance, the adjuvants and additives may impart one or more of: improved elastic properties; improved elastic recovery; longer enabled processing time; faster curing time; and lower residual tack. Included among such adjuvants and additives are catalysts, plasticizers, coupling agents, adhesion promoters, stabilizers including UV stabilizers, antioxidants, secondary tougheners, fillers, reactive diluents, drying agents, fungicides, flame retardants, rheological adjuvants, color pigments or color pastes, and/or optionally also, to a small extent, non-reactive diluents.

Suitable catalysts are substances that promote the (homo-) polymerization of epoxide compounds. Without intention to the limit the catalysts used in the present invention, mention may be made of the following suitable catalysts: acids or compounds hydrolyzable to acids, in particular a) organic carboxylic acids, such as acetic acid, benzoic acid, salicylic acid, 2-nitrobenzoic acid and lactic acid; b) organic sulfonic acids, such as methanesulfonic acid, p-toluenesulfonic acid and 4-dodecylbenzenesulfonic acid; c) sulfonic acid esters; d) inorganic acids, such as phosphoric acid; e) Lewis acid compounds, such as BF₃ amine complexes, SbF₆ sulfonium compounds, bis-arene iron complexes; f) Bronsted acid compounds, such as pentafluoroantimonic acid complexes; and, e) mixtures of the aforementioned acids.

In an embodiment, an amine catalyst for the curing a composition based on the epoxy resin may be photobase generator: upon exposure to UV radiation - typically in the wavelength from 320 to 420 nm - said photobase generator releases an amine.

In an alternative embodiment, an acid catalyst may be selected from photoacid generators (PAGs): upon irradiation with light energy, ionic photoacid generators undergo a fragmentation reaction and release one or more molecules of Lewis or Bronsted acid that catalyze the ring opening and addition of the pendent epoxide groups to form a crosslink.

A "plasticizer" for the purposes of this invention is a substance that decreases the viscosity of the composition and thus facilitates its processability. Herein the plasticizer may preferably be selected from the group consisting of: polydimethylsiloxanes (PDMS); diurethanes, ethers of monofunctional, linear or branched C4-C16 alcohols, such as Cetiol OE; esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; polyether plasticizers, such as end-capped polyethylene or polypropylene glycols; polystyrene; hydrocarbon plasticizers; chlorinated paraffin; and, mixtures thereof. It is noted that, in principle, phthalic acid esters can be used as the plasticizer but these are not preferred due to their toxicological potential.

In certain embodiments, the composition includes at least one epoxy silane coupling agent which can serve to enhance the adhesion of the curing composition to a given surface.

The compositions of the invention may further comprise fillers, non-reactive diluents or pigments.

In order to enhance shelf life even further, it is often advisable to further stabilize the compositions of the present invention with respect to moisture penetration through using drying agents. A need also occasionally exists to lower the viscosity of a coating, adhesive or sealant composition according to the present invention for specific applications, by using reactive diluent(s). The total amount of reactive diluents present will typically be up to 15 wt.%, and preferably from 1 to 5 wt.'/o, based on the total weight of the composition.

In one embodiment, the ratio of the mercaptan equivalent of the second component to the epoxy equivalent of the first component has a range of from 0.5 : 1 to 1.0 : 1, preferably from 0.8 : 1 to 1.0 : 1.

As used herein, the term "equivalent (eq.)" relates, as is usual in chemical notation, to the relative number of reactive groups present in the reaction. The term "equivalent weight" as used herein refers to the molecular weight divided by the number of a function concerned. As such, "epoxy equivalent weight (EEW)" means the weight of resin, in grams, that contains one equivalent of epoxy.

The invention's underlaying problem is further solved by the subject-matter of claim 11. According to a second aspect of the invention, there is provided a cured product obtained from the two-component (2K) curable composition as defined according to the invention.

In one embodiment, the cured product is obtained in that the first component and the second component are mixed at room temperature. In the framework of the present invention, the term "room temperature" is understood as 23°C plus or minus 4°C.

The cured product exhibits the desired high glass transition temperature. According to one embodiment, the glass transition temperature (T_{g}) of the cured product amounts to 80°C or more, preferably 90°C or more, more preferred 100°C or more. Glass transition temperatures (Tg) can be readily determined by techniques well known in the art, for example by differential scanning calorimetry (DSC).

The invention's underlaying problem is further solved by the subject-matter of claim 14. According to a third aspect of the invention, there is provided the use of the cured product according to the invention as an adhesive, a coating, a sealant or in a composite material.

Therefore, the two-component curing composition of the present invention can be used for wide applications such as sealing agents of a semiconductor and glass bonding applications such as sealing agents for displays of electroluminescence devices.

Features of referred embodiments being disclosed in combination with a specific aspect should be deemed to be disclosed as features of preferred embodiments for all other aspects. As such, e.g. the features designated as preferred embodiments disclosed in combination with the two-component (2K) curable composition as the first aspect are deemed to be disclosed as features of preferred embodiments of the cured product as the second aspect or preferred embodiments of the use of the cured product as the third aspect.

To form a composition, the above described parts are brought together and mixed. As is known in the art, to form two-component (2K) curable compositions, the elements of the two distinguishing compositions are independently brought together and homogeneously mixed under conditions which inhibit or prevent the reactive components from reacting: as would be readily comprehended by the skilled person in the art, this might include mixing conditions which limit or prevent exposure to moisture, heat or irradiation or which limit or prevent the activation of constituent latent catalyst(s). As such, it will often be preferred that the elements are not mixed by hand but are instead mixed by machine - a static or dynamic mixer, for example - in pre-determined amounts under anhydrous conditions without intentional heating or photo-irradiation. When use is intended, the two components are mixed together and thereafter applied on a substrate. Here again, it will often be preferred that the curative elements are not mixed by hand but are instead mixed by machine. In doing so, the curing starts.

In the following, exemplary embodiments (A) to (H) are disclosed which represent particularly preferred embodiments.
(A) A two-component (2K) curable composition comprising:
   a first component being an epoxy resin part and comprising, based on the weight of the first component,
      - more than 50 wt.% to 80 wt.% of a bisphenol A epoxy resin, and
      - 20 wt.% to less than 50 wt.%of a multifunctional epoxy resin; and
   a second component being a curing agent part and comprising, based on the weight of the second component,
      - 80 wt.% or more of a poly mercaptoalkyl glycoluril compound, and
      - from 0.5 wt.% to 20 wt.% of an accelerator,
   wherein the multifunctional epoxy resin comprises three or four glycidyl groups.
(B) A two-component (2K) curable composition comprising:
   a first component being an epoxy resin part and comprising, based on the weight of the first component,
      - more than 50 wt.% to 80 wt.% of a bisphenol A epoxy resin, and
      - 20 wt.% to less than 50 wt.%of a multifunctional epoxy resin; and
   a second component being a curing agent part and comprising, based on the weight of the second component,
      - 80 wt.% or more of a poly mercaptoalkyl glycoluril compound, and
      - from 0.5 wt.% to 20 wt.% of an accelerator,
   wherein the accelerator is a tertiary amine, preferably a tertiary polyamine.
(C) A two-component (2K) curable composition comprising:
   a first component being an epoxy resin part and comprising, based on the weight of the first component,
      - more than 50 wt.% to 80 wt.% of a bisphenol A epoxy resin, and
      - 20 wt.% to less than 50 wt.%of a multifunctional epoxy resin; and
   a second component being a curing agent part and comprising, based on the weight of the second component,
      - 80 wt.% or more of a poly mercaptoalkyl glycoluril compound, and
      - from 0.5 wt.% to 20 wt.% of an accelerator,
   wherein the multifunctional epoxy resin is 2,2'-[(1-methylethylidene)bis[6-(2-oxiranylmethoxy)-3,1-phenylene]methylene]]bis-oxirane, 4,4'-Methylenebis[N,N-bis(oxiranylmethyl)aniline], N,N,O-triglycidyl-m-aminophenol, N,N,O-triglycidyl-p-aminophenol, fluoroglycinoltriglycidyl ether, trihydroxybiphenyltriglycidyl ether, triglycidylaminophenol, and combination thereof.
(D) A two-component (2K) curable composition comprising:
   a first component being an epoxy resin part and comprising, based on the weight of the first component,
      - more than 50 wt.% to 80 wt.% of a bisphenol A epoxy resin, and
      - 20 wt.% to less than 50 wt.%of a multifunctional epoxy resin; and
   a second component being a curing agent part and comprising, based on the weight of the second component,
      - 80 wt.% or more of a poly mercaptoalkyl glycoluril compound, and
      - from 0.5 wt.% to 20 wt.% of an accelerator,
   wherein the poly mercaptoalkyl glycoluril compound being represented by the following formula I: 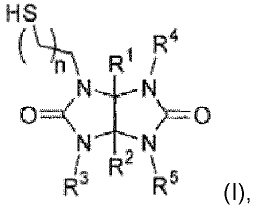
   wherein n represents 0, 1, 2, or 3; R¹ and R² each independently represent a hydrogen atom, a C₁-C₄ alkyl or phenyl; at least one of R³, R⁴ or R⁵ represents a primary C₁-C₄ mercaptoalkyl, the others each independently represent a hydrogen, a C₁-C₄ alkyl or phenyl,
   wherein preferably the poly mercaptoalkyl glycoluril compound being represented by the above formula I, wherein n represents 0, 1, 2, or 3; R¹ and R² each independently represent a hydrogen atom, a C₁-C₄ alkyl or phenyl; and R³, R⁴ and R⁵ represent a primary C₁-C₄ mercaptoalkyl,
   wherein more preferred the poly mercaptoalkyl glycoluril compound being represented by the above formula I, wherein n represents 1; R¹ and R² represent a hydrogen atom; and R³, R⁴ and R⁵ represent 1-mercaptoethyl.

The invention is further illustrated by the following examples without the intend to limit the invention's scope on the examples, only.

### EXAM PLES

The following compounds and materials are employed in the Examples:
- jER 828:: Bisphenol A, liquid epoxy resin formed by the condensation polymerization of bisphenol A and epichlorhydrin, available from Mitsubishi Chemical
- MY 721:: multifunctional epoxy resin, available from Huntsman Corporation
- SHOFREE BATG:: multifunctional epoxy resin, 2,2'-[(1-methylethylidene)bis[[6-(2-oxiranylmethoxy)-3,1-phenylene]methylene]]bis-oxirane, CAS#1799411-80-5, available from Showa Denko K.K.
- C3TS-G:: Tetrahydro-1,3,4,6-tetrakis(3-mercaptopropyl)-imidazo[4,5-d]imidazole-2,5(1H,3H)-dione, CAS#1454838-81-3, poly mercaptoalkyl glycoluril compound, available from Shikoku Chemicals Corporation
- Ancamine K54:: curing agent accelerator, tris-2,4,6-dimethylaminomethyl phenol, available from Evonik Corporation
- QE-340M:: mercaptan curing agent, available from Toray Fine Chemicals Co., Ltd.

### Gel time

As used in general herein, "gel time" refers to the time required for the mixed components to reach the gel point at 25°C, unless stated otherwise. As used herein, the "gel point" is the point where the mixture's storage modulus exceeds its loss modulus.

### Fixture time:

Fixture time (in seconds "s") on lap shear specimens is defined as the time to develop a shear strength of 0.1 N/mm² and was measured at 22 °C and 50% relative humidity.

### Glass transition temperature

The glass transition temperature was measured via DSC measurement by Perkin Elmer DSC 8000.

### Example 1

Part A (epoxy resin composition)

| | |
|---|---|
| jER 828: | 75% |
| MY 721: | 25% |

Part B (curing agent component)

| | |
|---|---|
| C3TS-G: | 92% |
| Ancamine K54: | 8% |

Part A:B, by weight = 56:44

Results:
Gel time (1g scale): 13 Min at 23°C
Fixture time: 14 Min at 23°C
Glass transition temperature (cured at 23°C 1 day): 109°C

### Example 2

Part A (epoxy resin composition)

| | |
|---|---|
| jER 828: | 75% |
| SHOFREE BATG: | 25% |

Part B (curing agent component)

| | |
|---|---|
| C3TS-G: | 92% |
| Ancamine K54: | 8% |

Part A:B, by weight = 56:44

Results:
Gel time (1g scale): 13.5 Min at 23°C
Fixture time: 14 Min at 23°C
Glass transition temperature (cured at 23°C 1 day): 100°C

### Comparative Example 1

Part A (epoxy resin composition)

| | |
|---|---|
| jER 828: | 100% |

Part B (curing agent component)

| | |
|---|---|
| QE-340M: | 92% |
| Ancamine K54: | 8% |

Part A:B, by weight = 50:50

Results:
Gel time (1g scale): 8.5 Min at 23°C
Fixture time: 10 Min at 23°C
Glass transition temperature (cured at 23°C 1 day): 33°C

## Claims

1. A two-component (2K) curable composition comprising:
a first component being an epoxy resin part and comprising, based on the weight of the first component,
- 20 wt.% or more of a bisphenol A epoxy resin, and
- 5 wt.% or more of a multifunctional epoxy resin; and
a second component being a curing agent part and comprising, based on the weight of the second component,
- 80 wt.% or more of a poly mercaptoalkyl glycoluril compound, and
- from 0.5 wt.% to 20 wt.% of an accelerator.

2. The composition according to claim 1, wherein
the first component comprises, based on the weight of the first component,
- 30 wt.% or more, preferably from 40 wt.% to 90 wt.%, more preferred from more than 50 wt.% to 80 wt.%, of a bisphenol A epoxy resin, and
- 15 wt.% or more, preferably 10 wt.% to 60 wt.%, more preferred 20 wt.% to less than 50 wt.%, of a multifunctional epoxy resin; and/or wherein
the second component, based on the weight of the second component,
- 85 wt.% or more, preferably from 89 wt.% to 96 wt.%, more preferred from 90 wt.% to 95 wt.%, of a poly mercaptoalkyl glycoluril compound, and
- from 1 wt.% to 15 wt.%, preferably from 4 wt.% to 11 wt.%, more preferred 5 wt.% to 10 wt.%, of an accelerator.

3. The composition according to claim 1 or claim 2, wherein the multifunctional epoxy resin comprises more than two glycidyl groups in one molecule, preferably three, four, five or six glycidyl groups in one molecule, more preferred three, four or five glycidyl groups, most preferred three or four glycidyl groups, in particular four glycidyl groups.

4. The composition according to any one of claims 1 to 3, wherein the multifunctional epoxy resin is a tetraglycidyl ether or tetraglycidyl amine, preferably tetraglycidyl amine, wherein more preferred the multifunctional epoxy resin is selected from the group consisting of tetraglycidyldiaminodiphenylmethane, tetraglycidylbis(aminomethylcyclohexane), tetraglycidyl-m-xylenediamine, tetraglycidylbenzophenone, bisresorcinoltetraglycidyl ether, tetraglycidyl ether of methylene dianiline, and combination thereof, most preferred the multifunctional epoxy resin is 2,2'-[(1-methylethylidene)bis[6-(2-oxiranylmethoxy)-3,1-phenylene]methylene]]bis-oxirane or 4,4'-Methylenebis[N,N-bis(oxiranylmethyl)aniline].

5. The composition according to any one of claims 1 to 3, wherein the multifunctional epoxy resin is a triglycidyl ether or a triglycidyl amine, preferably triglycidyl amine, wherein more preferred the multifunctional epoxy resin is selected from the group consisting of N,N,O-triglycidyl-m-aminophenol, N,N,O-triglycidyl-p-aminophenol, fluoroglycinoltriglycidyl ether, trihydroxybiphenyltriglycidyl ether, triglycidylaminophenol, and combination thereof.

6. The composition according to any one of claims 1 to 5, wherein the poly mercaptoalkyl glycoluril compound comprises two or more mercapto groups, preferably three or four mercapto groups, more preferred four mercapto groups.

7. The composition according to any one of claims 1 to 6, wherein the poly mercaptoalkyl glycoluril compound being represented by the following formula I: 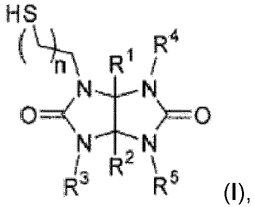
wherein n represents 0, 1, 2, or 3; R¹ and R² each independently represent a hydrogen atom, a C₁-C₄ alkyl or phenyl; at least one of R³, R⁴ or R⁵ represents a primary C₁-C₄ mercaptoalkyl, the others each independently represent a hydrogen, a C₁-C₄ alkyl or phenyl,
wherein preferably the poly mercaptoalkyl glycoluril compound being represented by the above formula I, wherein n represents 0, 1, 2, or 3; R¹ and R² each independently represent a hydrogen atom, a C₁-C₄ alkyl or phenyl; and R³, R⁴ and R⁵ represent a primary C₁-C₄ mercaptoalkyl,
wherein more preferred the poly mercaptoalkyl glycoluril compound being represented by the above formula I, wherein n represents 1; R¹ and R² represent a hydrogen atom; and R³, R⁴ and R⁵ represent 1-mercaptoethyl.

8. The composition according to any one of claims 1 to 7, wherein the accelerator is a tertiary amine, preferably a tertiary polyamine.

9. The composition according to any one of claims 1 to 8, wherein the accelerator is a tertiary amine being selected from the group consisting of triethylamine, tripropylamine, tributylamine, N-ethyl-diisopropylamine, N,N,N',N'-tetramethyl-ethylenediamine, pentamethyl-diethylenetriamine, N,N,N',N'-tetramethyl-propylenediamine, pentamethyldipropylenetriamine, N,N,N',N'-tetramethyl-1,3-butylenediamine, N,N,N',N'-tetramethyl-1,6-hexylenediamine, bis-(dimethylamino)-methane, N,N-dimethylbenzylamine, N,N-dimethyl-cyclohexylamine, N-methyl-dicyclohexylamine, N,N-dimethyl-hexadecylamine, bis-(N,N- diethylaminoethyl)-adipate, N,N-dimethyl-2-phenylethylamine, tri-(3-dimethylaminopropyl)amine, 1,4-diazabicyclo[2,2,2]octane, 1,8-diazabicyclo[5,4,0]undec-7-ene, 1,5-diazabicyclo[4,3,0]nonyl-5-ene, N-methylmorpholine, N-ethylmorpholine, N-cocoylmorpholine, N-aminoethylpiperazine, N,N'-dimethylpiperazine, N-methyl-N'-dimethylaminoethyl-piperazine, bis-(dimethylaminoethyl)-piperazine, 1,3,5-tri-(dimethylaminopropyl)-hexahydrotriazine, bis-(2-dimethylaminoethyl)-ether, 2,4,6-tri(dimethylaminomethyl)phenol, and combinations thereof, wherein preferably the amine is selected from the group consisting of N-aminoethylpiperazine, N,N'-dimethylpiperazine, and 2,4,6-tri(dimethylaminomethyl)phenol, wherein most preferred the amine is 2,4,6-tri(dimethylaminomethyl)phenol.

10. The composition according to any one of claims 1 to 9, wherein the ratio of the mercaptan equivalent of the second component to the epoxy equivalent of the first component has a range of from 0.5 : 1 to 1.0 : 1, preferably from 0.8 : 1 to 1.0 : 1.

11. A cured product obtained from the two-component (2K) curable composition as defined in any one of claims 1 to 10.

12. The cured product according to claim 11, wherein the cured product is obtained in that the first component and the second component are mixed at room temperature.

13. The cured product according to claim 11 or claim 12, wherein the glass transition temperature (T_{g}) of the cured product amounts to 80°C or more, preferably 90°C or more, more preferred 100°C or more.

14. Use of a cured product according to any one or more of claims 11 to 13 as an adhesive, a coating, a sealant or in a composite material.
